# EUROPÄISCHE PATENTSCHRIFT

(11) **EP 3 440 834 B1**
(45) Veröffentlichungstag und Bekanntmachung des Hinweises auf die Patenterteilung: **15.04.2020**
(21) Anmeldenummer: 17707052.1
(22) Anmeldetag: 28.02.2017
(51) Int. Cl.: H04N 9/31, G02B 26/10, G03B 21/20, G03B 21/14, G03B 21/53

(54) **LICHTMODUL ZUR EMISSION VON LICHT UND VERFAHREN ZUM EMITTIEREN VON SICHTBAREM UND NICHT-SICHTBAREM LICHT**
LIGHT MODULE FOR EMISSION OF LIGHT AND A METHOD FOR EMITTING VISIBLE AND NON-VISIBLE LIGHT
MODULE D'ECLAIRAGE DESTINE A EMETTRE DE LA LUMIERE ET PROCEDE D'EMISSION DE LUMIERE VISIBLE ET INVISIBLE

(30) Priorität: 06.04.2016 EP 16163978
(43) Veröffentlichungstag der Anmeldung: 13.02.2019
(73) Patentinhaber: FISBA AG, 9016 St. Gallen (CH)
(72) Erfinder: MOSER, Hansruedi, 9452 Hinterforst (CH); SPRING, Patrick, 9403 Goldach (CH); WÄSPI, Marcel, 9312 Häggenschwil (CH)
(74) Vertreter: Hepp Wenger Ryffel AG
(86) Internationale Anmeldenummer: PCT/EP2017/054599
(87) Internationale Veröffentlichungsnummer: WO 2017/174261

(56) Entgegenhaltungen:
- EP-A1- 2 785 059
- EP-A2- 2 709 366
- US-A1- 2005 035 943
- US-A1- 2012 293 775

## Beschreibung

Die Erfindung betrifft ein Lichtmodul, ein Projektionsmodul, ein Verfahren zum Emittieren von sichtbarem und nicht-sichtbarem Licht und ein Verfahren zur Herstellung eines Lichtmoduls, gemäss den Oberbegriffen der unabhängigen Ansprüche.

Es sind bereits Lichtmodule bekannt, bei denen Licht unterschiedlicher Wellenlängen in einem Strahl kombiniert wird, und dann auf eine Projektionsfläche gelenkt wird.

Aus der WO 2009/031094 und US 7,144,117 sind beispielweise Projektionsmodule bekannt, welche das jeweils kollimierte Licht dreier Laserdioden im roten, grünen und blauen Wellenlängenbereich auf dielektrische Spiegel richten, wobei das Licht zu einem Strahl kombiniert wird. Die dielektrischen Spiegel reflektieren das Licht mit den Wellenlängen der ihnen zugeordneten Laserdioden und sind transparent für die übrigen Wellenlängen.

EP 2 785 059 A1 zeigt ein weiteres Lichtmodul eines Laserprojektors bei dem 4 Lichtquellen (R, G, B, IR) zusammengeführt werden.

US 2012/0293775 A1 und EP 2 709 366 A2 zeigen dass einzelne oder alle Lichtquellen zusätzlich mit einer Strahlformungseinrichtung versehen werden können.

Der kombinierte Strahl wird zu einer zweidimensionalen Scaneinheit geführt, die mindestens einen Scannerspiegel umfasst und den Lichtstrahl dann auf eine Projektionsoberfläche lenkt.

Das Projektionsmodul umfasst ausserdem eine Infrarot-Lichtquelle, welche nicht-sichtbares Licht emittiert, das mittels eines weiteren dielektrischen Spiegels in den kombinierten Laserstrahl eingekoppelt wird und zusammen mit dem sichtbaren Licht die Projektionsfläche scannt.

Das Infrarotlicht kann dazu genutzt werden, die Entfernung der Projektionsfläche oder eine Unregelmässigkeit in den Absorptionseigenschaften zu detektieren. Damit können Hindernisse, unerwünschte oder gefährdete Objekte, zum Beispiel Personen, welche durch die Laserstrahlung gefährdet werden könnten, im Strahlgang festgestellt werden.

Das Infrarotlicht kann zusammen mit dem Laserstrahl projiziert werden oder dem Laserstrahl vorauslaufen. Dazu kann das Infrarotlicht entweder über eine separate Scannereinheit geführt werden oder unter einem anderen Winkel auf einen Scannerspiegel geführt werden als der Laserstrahl.

Das Projektionsmodul umfasst einen Infrarotsensor, der reflektiertes Infrarotlicht detektiert. Wird eine Unregelmässigkeit festgestellt, die zum Beispiel auf das Vorhandensein einer Person, die durch den Laserstrahl gefährdet werden könnte, insbesondere auf ein empfindliches Auges, hinweist, so kann der Arbeitsstrom der Laserdioden und damit die Intensität des dem Infrarotstrahl nachlaufenden Laserstrahls reduziert werden, bis das reflektierte Infrarotlicht wieder auf Normalmass zurückkehrt.

Um insbesondere mit miniaturisierten Lichtmodulen klare und scharfe Projektionsbilder zu ermöglichen, ist in der Regel eine Strahlformungseinrichtung vorgesehen, die den von den Laserdioden emittierten Strahl formt. Dabei kann ein asymmetrisches Strahlprofil, zum Beispiel mit ovalem Querschnitt und/oder mit ungleichen Fast- und Slow-Axen des Strahls, zu einem im Wesentlichen symmetrischen Strahlprofil, zum Beispiel mit einem im Wesentlichen runden Querschnitt, geformt werden.

Es kann pro Laserdiode eine Strahlformungseinrichtung vorgesehen sein, bevorzugt ist aber nur eine Strahlformungseinrichtung für den kombinierten Strahl vorgesehen.

Als Strahlformungseinrichtung kann eine Prismenteleskop vorgesehen sein, bei dem ein Laserstrahl mit elliptischem Querschnitt, wie er typischerweise eine Kollimiervorrichtung verlässt, durch ein Prismenpaar in einen Strahl mit im Wesentlichen rundem Querschnitt transformiert wird.

Es ist Aufgabe der Erfindung, ein Lichtmodul, ein Projektionsmodul, sowie ein Verfahren zum Emittieren von sichtbarem und nicht sichtbarem Licht zu schaffen, welche eine komfortable Bedienung erlauben und welche kostengünstig bereitstellbar sind.

Die Aufgabe wird gelöst durch ein Lichtmodul zur Emission von Licht das mindestens eine, bevorzugt mindestens drei Laserdioden, die Licht in einem sichtbaren Wellenlängenbereich emittieren, umfasst, wobei die Laserdioden bevorzugt in einer Diodenhalterung platziert, insbesondere eingepresst, sind.

Mittels der Diodenhalterung können die Laserdioden leicht in dem Lichtmodul montiert werden, insbesondere in einem Schritt in ein Gehäuse gesetzt werden, wenn alle Dioden in einer gemeinsamen Diodenhalterung platziert sind. Es wird eine kompakte Bauweise erreicht, sowie kurze Leitungen zur Ansteuerelektronik. Auf diese Weise lassen sich Lichtmodule kostengünstig produzieren.

Das Lichtmodul umfasst je eine Kollimiervorrichtung pro Laserdiode und eine Strahlkombinationsvorrichtung zum Zusammenführen des emittierten Lichtes der einzelnen Laserdioden. Als Strahlkombinationsvorrichtung können dichroitische Spiegel vorgesehen sein, die bestimmte Wellenlängen reflektieren und für die übrigen Wellenlängen transparent sind.

Bevorzugt ist je ein dichroitischer Spiegel pro Laserdiode vorgesehen. Die Laserdioden können dann nebeneinander angeordnet sein, sodass sie in etwa parallel ausgerichtete Laserstrahlen emittieren.

Das Lichtmodul umfasst eine Strahlformungsvorrichtung zur Formung des zusammengeführten Strahls oder je eine Strahlformungsvorrichtung pro Laserdiode.

Das Lichtmodul umfasst ausserdem mindestens einen, bevorzugt genau einen, Emitter zur Erzeugung von nicht-sichtbarem Licht, insbesondere eine IR-Laserdiode zur Erzeugung von InfrarotLicht.

Es können mehrere IR- Laserdioden, die zum Beispiel Licht mit jeweils unterschiedlichen Wellenlängen emittieren, vorgesehen sein.

Erfindungsgemäss ist der Emitter derartig angeordnet, dass das emittierte nicht-sichtbare Licht nicht durch die Strahlkombinationsvorrichtung und/oder nicht durch die Strahlformungsvorrichtung geführt wird.

Es hat sich herausgestellt, dass für die meisten Anwendungen das nicht-sichtbare Licht nicht so präzise geformt sein muss, wie das sichtbare Licht. Das nicht-sichtbare Licht kann dennoch mit hinreichender Genauigkeit reflektiert und detektiert werden, um die gewünschten Informationen zu extrahieren.

Bei der Montage kann auf eine Justierung des Emitters für das nicht-sichtbare Licht in Bezug auf eine Strahlformungsvorrichtung verzichtet werden. Ausserdem muss die Strahlformungsvorrichtung nicht dafür ausgelegt sein, auch nicht-sichtbares Licht zu formen. Sie kann beispielsweise weniger aufwendig beschichtet sein, wenn der Wellenlängenbereich nicht den Infrarot-Bereich umfasst. Bei Verwendung eines Prismenteleskops stellen die steilen Einfallswinkel bereits für den rot/grün/blau-Bereich eine Herausforderung dar. Eine weitere Verbreiterung würde die Anforderung extrem steigern.

Die Montage wird durch die erfindungsgemässe Anordnung erleichtert und das Lichtmodul kann kostengünstiger zur Verfügung gestellt werden.

Bevorzugt wird das nicht-sichtbare Licht in Richtung des Strahlverlaufs nach einer Strahlformungsvorrichtung zur Formung des zusammengeführten Strahls in den Bereich des zusammengeführten Strahls gekoppelt.

Das nicht-sichtbare Licht kann dabei entlang der optischen Achse des zusammengeführten Strahls geführt werden, leicht versetzt dazu oder in einem Winkel zu der optischen Achse des zusammengeführten Strahls, je nachdem, ob das nicht-sichtbare Licht zusammen mit dem sichtbaren Licht über eine Scanvorrichtung geleitet werden soll, versetzt zu dem sichtbaren Licht über dieselbe Scanvorrichtung geleitet werden soll oder über eine separate Scanvorrichtung geleitet werden soll.

In einer vorteilhaften Ausführung der Erfindung ist ein Filter vorgesehen, über den das nicht-sichtbare Licht in den Bereich des zusammengeführten Strahls der Laserdioden koppelbar ist, wobei der Filter bevorzugt in Richtung des Strahlverlaufs nach der Strahlformungsvorrichtung zur Formung des zusammengeführten Strahls angeordnet ist.

Bevorzugt weist das Lichtmodul eine Kollimiervorrichtung auf, mit der das nicht-sichtbare Licht kollimiert wird, bevor es zu dem sichtbaren Licht gekoppelt wird, insbesondere bevor es über den Filter läuft.

In einer vorteilhaften Ausführung sind die Laserdioden nebeneinander angeordnet, so dass das aus der jeweiligen Laserdiode austretende Licht im Wesentlichen parallel zu dem austretenden Licht aus der benachbarten Laserdiode ausgerichtet ist.

Diese Anordnung erlaubt eine einfache Montage, die gerade für miniaturisierte Projektionsmodule von Vorteil ist.

Ein besonders einfacher Aufbau und damit auch die Möglichkeit einer zügigen Montage ergibt sich, wenn der wenigstens eine Emitter, insbesondere die IR-Laserdiode, neben einer der Laserdioden angeordnet ist, wobei das aus dem Emitter austretende Licht im Wesentlichen parallel zu dem austretenden Licht aus der benachbarten Laserdiode ausgerichtet ist.

Laserdioden und IR-Laserdiode können auf einer gemeinsamen Diodenhalterung angebracht sein, sodass alle Laserdioden in einem Schritt in ein Gehäuse gesetzt werden können. Weiterhin sind nur dann kurze Leitungswege möglich.

Die Aufgabe wird weiterhin gelöst durch ein Projektionsmodul, das ein wie oben beschriebenes Lichtmodul umfasst. In einer vorteilhaften Ausführung der Erfindung umfasst das Projektionsmodul eine Scanvorrichtung, insbesondere einen MEMS-Spiegel, so dass zumindest das sichtbare Licht aus den Laserdioden durch die Scanvorrichtung ablenkbar ist, bevorzugt auch das nicht-sichtbare Licht.

Das Projektionsmodul kann in einem sehr kompakten Aufbau zur Verfügung gestellt werden.

In einer weiteren vorteilhaften Ausführung der Erfindung weist das Projektionsmodul einen Detektor für das nicht-sichtbare Licht, insbesondere einen IR Detektor, auf, mit dem reflektiertes nicht-sichtbares Licht, insbesondere IR-Licht, detektierbar ist.

Der Detektor kann im Lichtmodul angeordnet sein und für eine Leistungsregelung der IR-Laserdiode verwendet werden.

Der Detektor umfasst bevorzugt eine Auswerteeinheit oder ist mit einer Auswerteeinheit verbindbar, welche das detektierte nicht-sichtbare Licht auswertbar macht. Mittels des Detektors kann festgestellt werden, ob es Schwankungen im reflektierten Signal gibt. Es kann beispielsweise festgestellt werden, ob sich ein bewegtes Objekt oder eine Objekt mit besonderen Absorptionseigenschaften im Projektionsraum befindet.

Die Kombination aus einem erfindungsgemässen Lichtmodul, einer IR-Laserdiode und einem IR-Sensor erlaubt die Herstellung eines miniaturisierten Projektionsmoduls mit komfortablen Bedienmöglichkeiten.

Zum Beispiel umfasst das Projektionsmodul eine Steuerungseinheit oder ist mit einer Steuerungseinheit verbindbar, welche die Laserdioden und bevorzugt eine Scanvorrichtung und insbesondere bevorzugt den Emitter steuert.

Je nachdem, welche Information über das nicht-sichtbare Licht gewonnen wird, kann das Projektionsmodul, insbesondere das Lichtmodul, über die Steuerungseinheit reagieren, zum Beispiel die Intensität der Laserdioden reduzieren, die Projektionsfläche verschieben, zusätzliche Bilder einblenden oder anderes. Weiterhin ist eine Gestenerkennung möglich.

Die der Erfindung zugrunde Aufgabe wird ausserdem gelöst durch ein Verfahren zum Emittieren von sichtbarem und nicht sichtbarem Licht mit einem Lichtmodul, insbesondere wie oben beschrieben, mit den folgenden Verfahrensschritten.

Sichtbares Licht wird aus Laserdioden emittiert. Insbesondere wird sichtbares Licht im roten, blauen und grünen Wellenlängenbereich von jeweiligen Laserdioden emittiert.

Das emittierte sichtbare Licht der jeweiligen Laserdioden wird kollimiert, dafür durchläuft das emittierte Licht Kollimiervorrichtungen, die insbesondere jeweils den Laserdioden zugeordnet sind.

Das emittierte sichtbare Licht wird in einer Strahlkombinationsvorrichtung zu einem gemeinsamen Strahl kombiniert. Dazu durchläuft das emittierte Licht insbesondere dichroitische Filter.

Das emittierte sichtbare Licht der jeweiligen Laserdioden oder das kombinierte Licht wird in einer Strahlformungsvorrichtung geformt. Als Strahlformungsvorrichtung dient insbesondere ein Prismenteleskop. Dafür wird insbesondere ein Lichtstrahl mit elliptischem Querschnitt in einen Lichtstrahl mit im Wesentlichen rundem Querschnitt geformt.

Des Weiteren wird nicht-sichtbares Licht aus mindestens einem Emitter emittiert, insbesondere Infrarotlicht aus einer IR-Laserdiode, und das nicht-sichtbare Licht wird aus dem Lichtmodul abgegeben.

Insbesondere erfolgt ein gemeinsames Abgeben des sichtbaren und nicht-sichtbaren Lichtes aus dem Lichtmodul.

Erfindungsgemäss wird das nicht-sichtbare Licht nicht durch die Strahlkombinationsvorrichtung und/oder nicht durch die Strahlformungsvorrichtung geführt.

Insbesondere wird das nicht-sichtbare Licht in Richtung des Strahlverlaufs nach einer Strahlformungsvorrichtung zur Formung des zusammengeführten Strahls in den Bereich des zusammengeführten Strahls gekoppelt. Dazu wird das nicht-sichtbare Licht bevorzugt über einen Filter geleitet, der transparent für das sichtbare Licht ist und der das nicht-sichtbare Licht in Richtung des Strahlverlaufs des sichtbaren Lichts umlenkt.

Bevorzugt wird auch das nicht-sichtbare Licht kollimiert. Dazu durchläuft das aus dem Emitter austretende Licht insbesondere eine dem Emitter zugeordnete Kollimiervorrichtung.

Die Laserdioden für sichtbares Licht geben bevorzugt Licht im roten Wellenlängenbereich mit Wellenlängen von 638nm bis 650nm, im grünen Wellenlängenbereich bei etwa 520nm und im blauen Wellenlängenbereich bei etwa 450nm ab.

Der Emitter für nicht-sichtbares Licht emittiert bevorzugt Infrarotlicht bei etwa 830nm, grundsätzlich kann jedoch Licht aus einem Wellenlängenbereich zwischen 800 und 1600nm verwendet werden.

In einer vorteilhaften Ausführung des Verfahrens wird das reflektierte nicht-sichtbare Licht, insbesondere IR-Licht, durch einen Detektor detektiert. Insbesondere ist der Detektor in dem Lichtmodul angeordnet und wird zum Beispiel für die Leistungsregelung der IR-Laserdiode verwendet.

Alternativ oder zusätzlich ist ein Detektor im Projektionsmodul und nicht im Lichtmodul angeordnet.

Das Verfahren kann zur Erkennung von Bewegung oder von Objekten in einem Projektionsraum eingesetzt werden. Dazu wird bevorzugt in einem weiteren Schritt das Signal des Detektors in einer Auswerteeinheit weiterverarbeitet.

In einer vorteilhaften Weiterbildung der Erfindung werden die Laserdioden, der Emitter, insbesondere eine IR-Laserdiode, und/oder eine Scanvorrichtung, insbesondere ein MEMS-Spiegel, durch eine Steuerungseinheit gesteuert. Insbesondere kann das Signal des Detektors die Grundlage für die Steuerung bilden. Die Laserdioden und/oder die Scanvorrichtung können also in Abhängigkeit von einem reflektierten IR Signal geschaltet werden.

Die der Erfindung zugrunde Aufgabe wird ausserdem gelöst durch ein Verfahren zur Herstellung eines Lichtmoduls umfassend die folgenden Schritte.

Mindestens eine, bevorzugt drei, Laserdioden, die Licht in einem sichtbaren Wellenlängenbereich emittieren, werden in eine Diodenhalterung platziert, insbesondere eingepresst. Dabei sind die Laserdioden insbesondere nebeneinander angeordnet und emittieren im Wesentlichen parallel zueinander abgestrahltes Licht.

Die Kollimiervorrichtungen werden so gesetzt, dass jeweils eine Kollimiervorrichtung vor jeder Laserdiode angeordnet ist.

Dichroitischen Spiegel zur Kombination des emittierten, sichtbaren Lichtes werden gesetzt, sodass insbesondere je ein dichroitischen Spiegel pro Laserdiode vorhanden ist.

Eine Strahlformungsvorrichtung, bevorzugt ein Prismenteleskop, zur Formung des kombinierten sichtbaren Strahls, wird gesetzt.

Ein Emitter für nicht-sichtbares Licht, insbesondere eine IR-Laserdiode wird in eine Diodenhalterung platziert, insbesondere eingepresst, bevorzugt in dieselbe Diodenhalterung, in welcher die Laserdioden für sichtbares Licht platziert sind.

Insbesondere wird der Emitter für nicht-sichtbares Licht an einer Position neben den Laserdioden platziert, so dass auch die Emitter im Wesentlichen Licht emittiert, das parallel zu dem sichtbaren Licht abgestrahlt wird.

Ausserdem wird ein Filter zum Kombinieren des sichtbaren und nicht-sichtbaren Lichts so gesetzt, dass das nicht-sichtbare Licht erst nach der Strahlkombinationsvorrichtung mit dem kombinierten Licht der sichtbaren Laserdioden kombiniert wird.

Die Verfahrensschritte können in der genannten Reihenfolge oder in einer anderen Reihenfolge ablaufen.

Beispielsweise können zunächst alle Dioden in einer Diodenhalterung platziert werden, die erst auf einem Träger des Lichtmoduls befestigt wird, wenn die übrigen Komponenten montiert sind.

Es können auch zunächst die Dioden und die Filter gesetzt werden und anschliessend die Kollimiervorrichtungen montiert werden.

Im Folgenden wird die Erfindung in Ausführungsbeispielen näher erläutert. Hierzu zeigt
- Fig. 1: zeigt eine schematische Darstellung eines ersten Beispiels für ein Lichtmodul in perspektivischer Ansicht;
- Fig. 2: zeigt eine schematische Darstellung des ersten Beispiels für ein Lichtmodul in Draufsicht;
- Fig. 3: zeigt eine schematische Darstellung eines zweiten Beispiels für ein Lichtmodul in Draufsicht;
- Fig. 4: zeigt eine schematische Darstellung eines Beispiels für ein Projektionsmodul in Draufsicht.

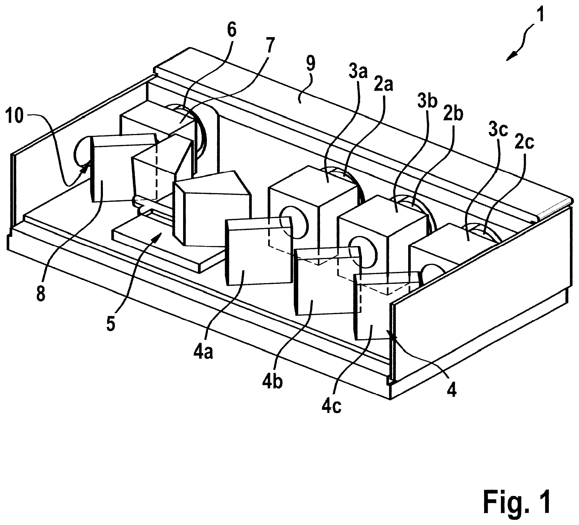

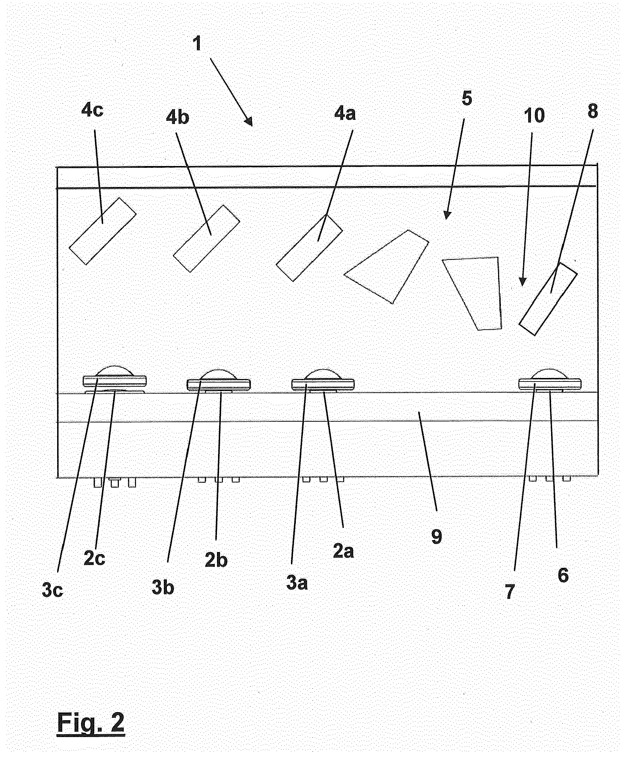

Figur 1 zeigt eine schematische Darstellung eines ersten Beispiels für ein Lichtmodul 1 in perspektivischer Ansicht. Figur 2 zeigt dasselbe Beispiel in Draufsicht. Das Lichtmodul 1 umfasst drei Laserdioden 2a, 2b, 2c, die Licht in einem sichtbaren Wellenlängenbereich emittieren. Die Laserdioden 2a, 2b, 2c sind in einer Diodenhalterung 9 angeordnet.

Pro Laserdiode 2a, 2b, 2c ist je eine Kollimiervorrichtung 3a, 3b, 3c vorgesehen.

Das Lichtmodul 1 umfasst eine Strahlkombinationsvorrichtung 4 zum Zusammenführen des emittierten Lichtes der einzelnen Laserdioden. Im gezeigten Ausführungsbeispiel ist je ein dichroitischer Spiegel 4a, 4b, 4c pro Laserdiode 2a, 2b, 2c vorgesehen.

Das Lichtmodul 1 umfasst eine Strahlformungsvorrichtung 5 zur Formung des zusammengeführten Strahls.

Das Lichtmodul 1 umfasst einen Emitter zur Erzeugung von nicht-sichtbarem Licht 6, hier eine IR-Laserdiode.

Der Emitter 6 ist derartig angeordnet, dass das emittierte nicht-sichtbare Licht nicht durch die Strahlkombinationsvorrichtung 4 und ausserdem nicht durch die Strahlformungsvorrichtung 5 geführt wird.

Das IR-Licht wird in einer Kollimiervorrichtung 7 kollimiert und mittels eines Filters 8 in Richtung des Strahlverlaufs nach der Strahlformungsvorrichtung 5 in den Bereich 10 des zusammengeführten Strahls gekoppelt.

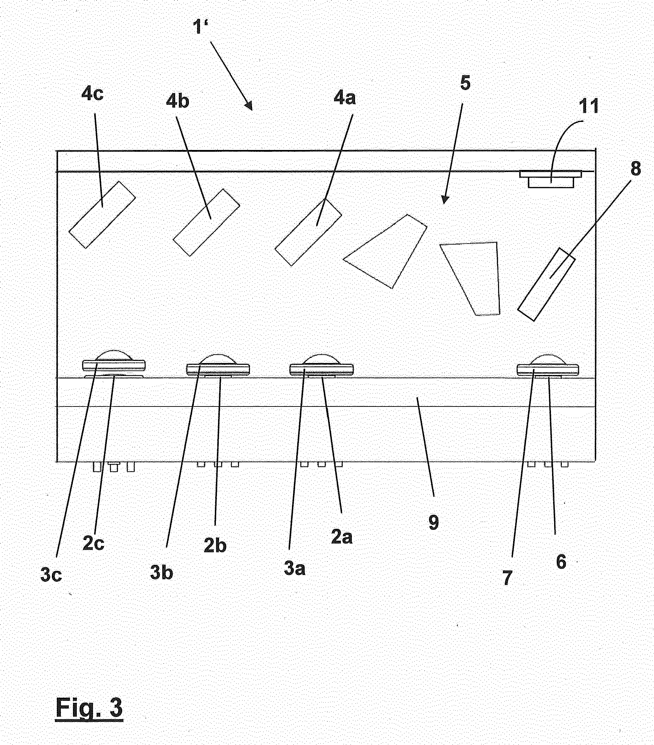

In Figur 3 ist ein Lichtmodul 1' gezeigt, in dem sich ausserdem ein IR Detektor 11 befindet, der mit dem Rückreflex des Filters 8 beaufschlagt wird.

Das gemessene Signal kann zur Steuerung und/oder Regelung der Diodenleistung verwendet werden.

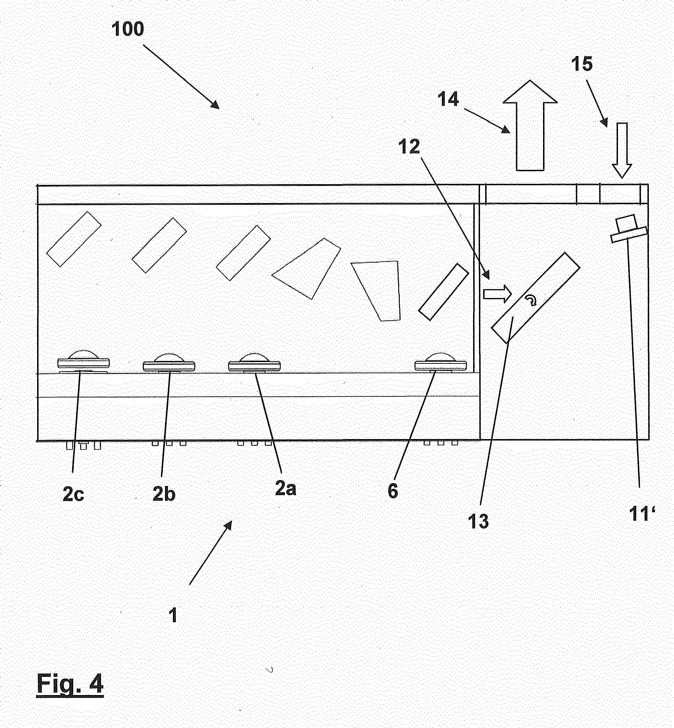

Figur 4 zeigt eine schematische Darstellung eines Beispiels für ein Projektionsmodul 100 in Draufsicht. Das Projektionsmodul 100 umfasst ein Lichtmodul 1, wie es in Figuren 1 und 2 dargestellt ist.

Das aus dem Lichtmodul 1 austretende Licht 12 trifft auf eine Scanvorrichtung 13 in Form eines MEMS-Spiegels und wird von diesem als Projektionslicht 14 gestreut.

Zurück reflektiertes IR-Licht 15 trifft auf einen IR-Sensor 11'.

Die Laserdioden 2a, 2b, 2c, 6 und/oder die Scanvorrichtung 13 können in Abhängigkeit von dem an dem Sensor 11' gemessenen Signal geschaltet werden.

## Patentansprüche

1. Lichtmodul zur Emission von Licht, umfassend
mindestens drei Laserdioden (2a, 2b, 2c), die Licht in einem sichtbaren Wellenlängenbereich emittieren,
je eine Kollimiervorrichtung (3a, 3b, 3c) pro Laserdiode, eine Strahlkombinationsvorrichtung (4) zum Zusammenführen des emittierten und kollimierten Lichtes der einzelnen Laserdioden (2a, 2b, 2c),
eine Strahlformungsvorrichtung (5) zur Formung des zusammengeführten Strahls,
und mindestens einen Emitter (6) zur Erzeugung von nicht-sichtbarem Licht, insbesondere eine IR-Laserdiode,
**dadurch gekennzeichnet, dass**
der Emitter (6) derartig angeordnet ist, dass das emittierte nicht-sichtbare Licht nicht durch die Strahlformungsvorrichtung (5) geführt wird, wobei der Emitter (6) derartig angeordnet ist, dass das emittierte nicht-sichtbare Licht in Richtung des Strahlverlaufs nach einer Strahlformungsvorrichtung (5) zur Formung des zusammengeführten Strahls in den Bereich (10) des zusammengeführten Strahls gekoppelt wird.

2. Lichtmodul nach Anspruch 1, **dadurch gekennzeichnet, dass** die Laserdioden (2a, 2b, 2c) in einer Diodenhalterung angeordnet, insbesondere eingepresst, sind.

3. Lichtmodul nach einem der vorhergehenden Ansprüche, **dadurch gekennzeichnet, dass** die Strahlkombinationsvorrichtung (4) dichroitische Spiegel (4a, 4b, 4c) umfasst.

4. Lichtmodul nach einem der vorhergehenden Ansprüche, **dadurch gekennzeichnet, dass** ein Filter (8) vorgesehen ist, über den das nicht-sichtbare Licht in den Bereich des zusammengeführten Strahls der Laserdioden (2a, 2b, 2c) koppelbar ist und der Filter (8) in Richtung des Strahlverlaufs nach der Strahlformungsvorrichtung (5) zur Formung des zusammengeführten Strahls angeordnet ist.

5. Lichtmodul nach einem der vorhergehenden Ansprüche, **dadurch gekennzeichnet, dass** die Laserdioden (2a, 2b, 2c) nebeneinander angeordnet sind, so dass das aus der jeweiligen Laserdiode (2a, 2b, 2c) austretende Licht im Wesentlichen parallel zu dem austretenden Licht aus der benachbarten Laserdiode (2a, 2b, 2c) ausgerichtet ist.

6. Lichtmodul nach einem der vorhergehenden Ansprüche, **dadurch gekennzeichnet, dass** der Emitter (6), insbesondere die IR-Laserdiode, neben einer der Laserdioden (2a, 2b, 2c) angeordnet ist, wobei das aus dem Emitter (6) austretende Licht im Wesentlichen parallel zu dem austretenden Licht aus der benachbarten Laserdiode ausgerichtet ist.

7. Projektionsmodul umfassend ein Lichtmodul nach einem der Ansprüche 1-6, **dadurch gekennzeichnet, dass** das Projektionsmodul (100) eine Scanvorrichtung (13), insbesondere einen MEMS-Spiegel, umfasst, so dass zumindest das sichtbare Licht aus den Laserdioden (2a, 2b, 2c) durch die Scanvorrichtung (13) ablenkbar ist, bevorzugt auch das nicht-sichtbare Licht des Emitters (6).

8. Projektionsmodul nach Anspruch 7, **dadurch gekennzeichnet, dass** das Projektionsmodul (100), insbesondere das Lichtmodul (1, 1'), einen Detektor (11, 11') für das nicht-sichtbare Licht, insbesondere einen IR Detektor, umfasst, mit dem reflektiertes nicht-sichtbares Licht, insbesondere IR-Licht, detektierbar ist und der bevorzugt eine Auswerteeinheit umfasst oder der mit einer Auswerteeinheit verbindbar ist, welche das detektierte nicht-sichtbare Licht auswertbar macht.

9. Projektionsmodul nach einem der Ansprüche 7 oder 8, **dadurch gekennzeichnet, dass** das Projektionsmodul, insbesondere das Lichtmodul (1, 1'), eine Steuerungseinheit umfasst oder mit einer Steuerungseinheit verbindbar ist, welche die Laserdioden (2a, 2b, 2c), die Scanvorrichtung (13) und/oder den Emitter (6) steuert.

10. Verfahren zum Emittieren von sichtbarem und nicht sichtbarem Licht mit einem Lichtmodul (1), gemäss einem der Ansprüche 1 bis 6, umfassend die Schritte
- Emittieren von sichtbarem Licht aus mindestens drei Laserdioden (2a, 2b, 2c),
- Kollimieren des emittierten sichtbaren Lichtes der jeweiligen Laserdioden (2a, 2b, 2c),
- Kombinieren des emittierten und kollimierten sichtbaren Lichtes der einzelnen Laserdioden in einer Strahlkombinationsvorrichtung (4),
- Formen des kombinierten Lichtes in einer Strahlformungsvorrichtung (5), insbesondere einem Prismenteleskop,
- Emittieren von nicht-sichtbarem Licht aus einem Emitter (6), insbesondere Infrarotlicht aus einer IR-Laserdiode (2a, 2b, 2c),
- Gemeinsames Abgeben des sichtbaren und nicht-sichtbaren Lichtes aus dem Lichtmodul (1, 1') ohne dass das nicht-sichtbare Licht durch die Strahlformungsvorrichtung (5) geführt wird,
wobei das nicht-sichtbaren Licht in Richtung des Strahlverlaufs nach einer Strahlformungsvorrichtung (5) zur Formung des zusammengeführten Strahls in den Bereich (10) des zusammengeführten Strahls gekoppelt wird.

11. Verfahren nach Anspruch 10, **dadurch gekennzeichnet, dass** das reflektierte nicht-sichtbare Licht, insbesondere IR-Licht, durch einen Detektor (11, 11'), insbesondere ein IR-Detektor, der insbesondere in dem Lichtmodul (1) angeordnet ist, detektiert wird.

12. Verfahren nach einem der Ansprüche 10 oder 11, **dadurch gekennzeichnet, dass** die Laserdioden (2a, 2b, 2c), der Emitter (6), insbesondere die IR-Laserdiode, und/oder eine Scanvorrichtung (13), insbesondere ein MEMS-Spiegel, durch eine Steuerungseinheit gesteuert werden.

13. Verfahren zur Herstellung eines Lichtmoduls (1) gemäss einem der Ansprüche 1 bis 6, umfassend die Schritte
- Platzieren, insbesondere Einpressen, von mindestens drei Laserdioden (2a, 2b, 2c) in eine Diodenhalterung (9), die Licht in einem sichtbaren Wellenlängenbereich emittieren, so dass die Laserdioden (2a, 2b, 2c) insbesondere nebeneinander angeordnet sind und im Wesentlichen parallel zueinander Licht emittieren,
- Setzen von jeweils einer Kollimiervorrichtung (3a, 3b, 3c) vor jede Laserdiode,
- Setzen von je einem dichroitischen Spiegel (4a, 4b, 4c) pro Laserdiode (2a, 2b, 2c) zur Kombination des emittierten und kollimierten sichtbaren Lichtes der einzelnen Laserdioden (2a, 2b, 2c),
- Setzen von einer Strahlformungsvorrichtung (5), bevorzugt einem Prismenteleskop, zur Formung des kombinierten sichtbaren Strahls,
- Platzieren, insbesondere Einpressen, eines Emitters (6) zur Erzeugung von nicht sichtbarem Licht, insbesondere von einer IR-Laserdiode (6), in eine Diodenhalterung (9), insbesondere an einer Position neben den Laserdioden (2a, 2b, 2c), so dass der Emitter (6) Licht im Wesentlichen parallel zu dem Laserdioden (2a, 2b, 2c) emittiert und das nicht sichtbare Licht erst nach der Strahlformungseinrichtung mit dem kombinierten Licht der sichtbaren Laserdioden (2a, 2b, 2c) kombiniert wird.

## Claims

1. A light module for the emission of light, comprising
at least three laser diodes (2a, 2b, 2c) emitting light in a visible wavelength range,
one collimating device (3a, 3b, 3c) per laser diode,
a beam combining device (4) for combining the emitted and collimated light of the individual laser diodes (2a, 2b, 2c),
a beam shaping device (5) for shaping the merged beam,
and at least one emitter (6) for generating non-visible light, in particular an IR laser diode,
**characterised in that** the emitter (6) is arranged such that the emitted invisible light is not guided through the beam shaping device (5), the emitter (6) being arranged such that the emitted invisible light is coupled in the direction of the beam path downstream of a beam shaping device (5) into the region (10) of the combined beam for shaping the combined beam.

2. The light module according to claim 1, **characterized in that** the laser diodes (2a, 2b, 2c) are arranged, in particular pressed in, in a diode holder.

3. The light module according to any of the preceding claims, **characterized in that** the beam combining device (4) comprises dichroic mirrors (4a, 4b, 4c).

4. The light module according to one of the preceding claims, **characterized in that** a filter (8) is provided via which the non-visible light can be coupled into the region of the combined beam of the laser diodes (2a, 2b, 2c) and the filter (8) is arranged in the direction of the beam path downstream of the beam shaping device (5) for shaping the combined beam.

5. The light module according to one of the preceding claims, **characterized in that** the laser diodes (2a, 2b, 2c) are arranged side by side so that the light emerging from the respective laser diode (2a, 2b, 2c) is aligned substantially parallel to the emerging light from the adjacent laser diode (2a, 2b, 2c).

6. The light module according to one of the preceding claims, **characterized in that** the emitter (6), in particular the IR laser diode, is arranged next to one of the laser diodes (2a, 2b, 2c), the light emerging from the emitter (6) being aligned substantially parallel to the emerging light from the adjacent laser diode.

7. A projection module comprising a light module according to one of claims 1-6, **characterized in that** the projection module (100) comprises a scanning device (13), in particular a MEMS mirror, so that at least the visible light from the laser diodes (2a, 2b, 2c) can be deflected by the scanning device (13), preferably also the non-visible light of the emitter (6).

8. The projection module according to claim 7, **characterized in that** the projection module (100), in particular the light module (1, 1'), comprises a detector (11, 11') for the non-visible light, in particular an IR detector, with which reflected non-visible light, in particular IR light, can be detected and which preferably comprises an evaluation unit or which can be connected to an evaluation unit which makes the detected non-visible light evaluable.

9. The projection module according to one of claims 7 or 8, **characterized in that** the projection module, in particular the light module (1, 1'), comprises a control unit or can be connected to a control unit which controls the laser diodes (2a, 2b, 2c), the scanning device (13) and/or the emitter (6) .

10. A method for emitting visible and non-visible light with a light module (1) according to any one of claims 1 to 6, comprising the steps
- emitting visible light from at least three laser diodes (2a, 2b, 2c),
- Collimation of the emitted visible light of the respective laser diodes (2a, 2b, 2c)
- Combining the emitted and collimated visible light of the individual laser diodes in a beam combining device (4)
- Shaping the combined light in a beam shaping device (5), in particular a prism telescope,
- Emitting non-visible light from an emitter (6), in particular infrared light from an IR laser diode (2a, 2b, 2c)
- emission of the visible and non-visible light from the light module (1), in particular joint emission of the visible and non-visible light from the light module (1, 1'), without the non-visible light being guided through the beam shaping device (5)
wherein the non-visible light is coupled into the region (10) of the merged beam in the direction of the beam path after a beam shaping device (5) for shaping the merged beam.

11. The method according to claim 10, **characterized in that** the reflected non-visible light, in particular IR light, is detected by a detector (11, 11'), in particular an IR detector, arranged in particular in the light module (1).

12. The method according to one of claims 10 or 11, **characterized in that** the laser diodes (2a, 2b, 2c), the emitter (6), in particular the IR laser diode, and/or a scanning device (13), in particular a MEMS mirror, are controlled by a control unit.

13. The method of manufacturing a light module (1) according to any one of claims 1 to 6, comprising the steps
- Placing, in particular pressing, at least three laser diodes (2a, 2b, 2c) into a diode holder (9), which emit light in a visible wavelength range, so that the laser diodes (2a, 2b, 2c) are arranged in particular next to each other and emit light substantially parallel to each other,
- placing a collimating device (3a, 3b, 3c) in front of each laser diode,
- Setting one dichroic mirror (4a, 4b, 4c) per laser diode (2a, 2b, 2c) for combining the emitted and collimated visible light of the individual laser diodes (2a, 2b, 2c),
- Setting of a beam shaping device (5), preferably a prism telescope, for shaping the combined visible beam,
- Placing, in particular pressing, an emitter (6) for generating non-visible light, in particular from an IR laser diode (6), into a diode holder (9), in particular at a position next to the laser diodes (2a, 2b, 2c), so that the emitter (6) emits light substantially parallel to the laser diodes (2a, 2b, 2c) and the non-visible light is combined with the combined light of the visible laser diodes (2a, 2b, 2c) only after the beam shaping device.

## Revendications

1. Module de lumière pour l'émission de lumière, comprenant
au moins trois diodes laser (2a, 2b, 2c) émettant de la lumière dans une gamme de longueurs d'onde visible,
un dispositif de collimation (3a, 3b, 3c) par diode laser, un dispositif de combinaison de faisceaux (4) pour combiner la lumière émise et collimatée des différentes diodes laser (2a, 2b, 2c),
un dispositif de mise en forme du faisceau (5) pour mettre en forme le faisceau combiné,
et au moins un émetteur (6) pour générer de la lumière non visible, en particulier une diode laser IR
**caractérisé en ce que**
l'émetteur (6) est disposé de telle sorte que la lumière non visible émise ne soit pas guidée à travers le dispositif de mise en forme du faisceau (5), l'émetteur (6) étant disposé de telle sorte que la lumière non visible émise soit couplée dans la direction du trajet du faisceau en aval d'un dispositif de mise en forme du faisceau (5) dans la zone (10) du faisceau combiné pour mettre en forme le faisceau combiné.

2. Module de lumière selon la revendication 1, **caractérisé en ce que** les diodes laser (2a, 2b, 2c) sont disposées, en particulier enfoncées, dans un support de diodes.

3. Module de lumière selon l'une des revendications précédentes, **caractérisé en ce que** le dispositif de combinaison de faisceaux (4) comprend des miroirs dichroïques (4a, 4b, 4c) .

4. Module de lumière selon l'une des revendications précédentes, **caractérisé en ce qu'**il est prévu un filtre (8) par lequel la lumière non visible peut être couplée dans la zone du faisceau combiné des diodes laser (2a, 2b, 2c), et le filtre (8) est disposé dans la direction du trajet du faisceau en aval du dispositif de mise en forme du faisceau (5) pour la mise en forme du faisceau combiné.

5. Module de lumière selon l'une des revendications précédentes, **caractérisé en ce que** les diodes laser (2a, 2b, 2c) sont disposées côte à côte de sorte que la lumière sortant de la diode laser respective (2a, 2b, 2c) est orientée essentiellement parallèlement à la lumière sortant de la diode laser adjacente (2a, 2b, 2c).

6. Module de lumière selon l'une des revendications précédentes, **caractérisé en ce que** l'émetteur (6), en particulier la diode laser IR, est disposé à côté de l'une des diodes laser (2a, 2b, 2c), la lumière sortant de l'émetteur (6) étant orientée essentiellement parallèlement à la lumière sortant de la diode laser voisine.

7. Module de projection comprenant un module de lumière selon l'une quelconque des revendications 1 à 6, **caractérisé en ce que** le module de projection (100) comprend un dispositif de balayage (13), en particulier un miroir MEMS, de sorte qu'au moins la lumière visible des diodes laser (2a, 2b, 2c) peut être déviée par le dispositif de balayage (13), de préférence également la lumière non visible de l'émetteur (6).

8. Module de projection selon la revendication 7, **caractérisé en ce que** le module de projection (100), en particulier le module de lumière (1, 1'), comprend un détecteur (11, 11') pour la lumière non visible, en particulier un détecteur IR, avec lequel la lumière non visible réfléchie, en particulier la lumière IR, peut être détectée et qui comprend de préférence une unité d'évaluation ou qui peut être connecté à une unité d'évaluation qui rend la lumière non visible détectée évaluable.

9. Module de projection selon l'une des revendications 7 ou 8, **caractérisé en ce que** le module de projection, en particulier le module de lumière (1, 1'), comprend une unité de commande ou peut être relié à une unité de commande qui commande les diodes laser (2a, 2b, 2c), le dispositif de balayage (13) et/ou l'émetteur (6).

10. Procédé d'émission de lumière visible et non visible avec un module de lumière (1) selon l'une quelconque des revendications 1 à 6, comprenant les étapes
- émission de la lumière visible à partir d'au moins trois diodes laser (2a, 2b, 2c),
- Collimation de la lumière visible émise par les diodes laser respectives (2a, 2b, 2c)
- Combinaison de la lumière visible émise et collimatée par les différentes diodes laser dans un dispositif de combinaison de faisceaux (4),
- Mise en forme de la lumière combinée dans un dispositif de mise en forme du faisceau (5), en particulier un télescope à prisme,
- Émission de lumière non visible par un émetteur (6), en particulier de lumière infrarouge par une diode laser IR (2a, 2b, 2c)
- émission de la lumière visible et non visible du module de lumière (1), en particulier émission conjointe de la lumière visible et non visible du module de lumière (1, 1'), sans que la lumière non visible soit guidée par le dispositif de mise en forme du faisceau (5), dans lequel la lumière non visible est couplée dans la zone (10) du faisceau fusionné dans la direction du trajet du faisceau après un dispositif de mise en forme du faisceau (5) pour mettre en forme le faisceau fusionné.

11. Procédé selon la revendication 10, **caractérisé en ce que** la lumière non visible réfléchie, en particulier la lumière IR, est détectée par un détecteur (11, 11'), en particulier un détecteur IR, qui est disposé en particulier dans le module de lumière (1).

12. Procédé selon l'une des revendications 10 ou 11, **caractérisé en ce que** les diodes laser (2a, 2b, 2c), l'émetteur (6), en particulier la diode laser IR, et/ou un dispositif de balayage (13), en particulier un miroir MEMS, sont commandés par une unité de commande.

13. procédé de fabrication d'un module de lumière (1) selon l'une quelconque des revendications 1 à 6, comprenant les étapes
- Placer, en particulier presser, au moins trois diodes laser (2a, 2b, 2c) dans un support de diodes (9), qui émettent de la lumière dans une gamme de longueurs d'onde visible, de sorte que les diodes laser (2a, 2b, 2c) sont disposées en particulier les unes à côté des autres et émettent de la lumière sensiblement parallèlement les unes aux autres,
- Placer un dispositif de collimation (3a, 3b, 3c) devant chaque diode laser,
- Mettre en place un miroir dichroïque (4a, 4b, 4c) par diode laser (2a, 2b, 2c) pour combiner la lumière visible émise et collimatée des différentes diodes laser (2a, 2b, 2c),
- Mettre en place un dispositif de mise en forme du faisceau (5), de préférence un télescope à prisme, pour mettre en forme le faisceau visible combiné,
- Placer, en particulier presser, un émetteur (6) pour la production de lumière non visible, en particulier d'une diode laser IR (6), dans un support de diodes (9), en particulier à un endroit situé à côté des diodes laser (2a, 2b, 2c), de sorte que l'émetteur (6) émette de la lumière essentiellement parallèlement aux diodes laser (2a, 2b, 2c) et que la lumière non visible ne soit combinée avec la lumière combinée des diodes laser visibles (2a, 2b, 2c) qu'après le dispositif de mise en forme du faisceau.
